# EUROPÄISCHE PATENTANMELDUNG

(11) **EP 3 184 683 A1**
(43) Veröffentlichungstag der Anmeldung: **28.06.2017**
(21) Anmeldenummer: 16201624.0
(22) Anmeldetag: 01.12.2016
(51) Int. Cl.: D05B 69/12, D05B 69/24

(54) **MAGNETISCHES ENCODERSYSTEM FÜR EINEN SERVOMOTOR EINER NÄHMASCHINE**

(30) Priorität: 23.12.2015 DE 102015226666
(71) Anmelder: Frankl & Kirchner GmbH & Co KG Fabrik für Elektromotoren u. elektrische Apparate, 68703 Schwetzingen (DE)
(72) Erfinder: Sinn, Wolfgang, 69231 Rauenberg (DE)
(74) Vertreter: Rau, Schneck & Hübner Patentanwälte Rechtsanwälte PartGmbB

(57) **Zusammenfassung**

Ein magnetisches Encodersystem (1) eines Nähmaschinenantriebs umfasst eine magnetische, magnetisierte Scheibe (5) mit sich abwechselnden Nord-und Südpolelementen (10, 11), die als Inkrementalmarkierungen dienen. Diese sind als eine Vollring-Inkrementalspur (8), die sich längs eines Umfangs der ferritischen Scheibe (5) erstreckt, und als eine Ringabschnitts-Inkrementalspur (9), die als Ringabschnitt auf der ferritischen Scheibe (5) ausgeführt ist. Es resultiert ein magnetisches Encodersystem für einen Servomotor einer Nähmaschine.

## Beschreibung

Der Inhalt der deutschen Patentanmeldung 10 2015 226 666.4 wird durch in Bezugnahme hierin aufgenommen.

Die Erfindung betrifft einen Nähmaschinenantrieb.

Nähmaschinenantriebe sind in vielfacher Ausführung bekannt, beispielsweise aus der DE 19 714 520 A1.

Eine Aufgabe der vorliegenden Erfindung ist es, einen Nähmaschinenantrieb so weiterzuentwickeln, dass bei gegebener Sicherheit einer Signalübertragung ein konstruktiver Aufwand reduziert wird.

Diese Aufgabe ist erfindungsgemäß gelöst durch einen Nähmaschinenantrieb mit den im Anspruch 1 angegebenen Merkmalen.

Erfindungsgemäß wurde erkannt, dass eine derartige Anordnung deutliche Vorteile bietet. Die Scheibe kann drehfest mit einer drehbaren Welle, insbesondere mit einer Motorwelle verbunden sein. Speziell bei Motoren, die z. B. am Oberteil einer Maschine befestigt werden, ist ein gewisser Verschmutzungsgrad eines hierzu gehörenden Encodersystems zu erwarten, was z. B. eine optische Erfassung erschwert. Die Inkrementalmarkierungen sind als eine Vollring-Inkrementalspur über 360° längs eines Umfangs der Scheibe und als eine zusätzliche Ringabschnitts-Inkrementalspur, die einen Abschnitt der Scheibe bedeckt, ausgeführt. Die magnetischen Inkrementalmarkierungen ermöglichen es beispielsweise, den konstruktiven Aufwand insbesondere zur Abdichtung eines Encodergehäuses erheblich zu reduzieren, da Verschmutzungen den magnetischen Fluss nicht beeinträchtigen. Vorteilhafterweise werden aus diesem Grund insbesondere keine speziell abgedichteten Lager, z. B. für eine Wellenlagerung, mehr benötigt, was eine erhebliche Kostenersparnis bewirkt. Die erfassbaren Signale beider Inkrementalspuren können unabhängigen Signalauswertungen zugeführt werden. Auch mehr als zwei Inkrementalspuren können zum Einsatz kommen. Auch mehr als zwei Ringabschnitts-Inkrementalspuren können zum Einsatz kommen. Vorteilhafterweise können sich die einzelnen Ringabschnitts-Inkrementalspuren in unterschiedlichen Ausmaßen an den Umfängen auf der Scheibe erstrecken, was z. B. eine Drehrichtungserkennung ermöglicht. Die Inkrementalspuren können auf einer Deckenwand und/oder auf einer Bodenwand der Scheibe aufgebracht sein. Die Inkrementalspuren können auf einem äußeren Umkreis der Scheibe aufgebracht sein. Die Inkrementalspuren können auf einer äußeren Mantelwand der Scheibe aufgebracht sein. Die Scheibe kann aus ferritischem Material gefertigt sein. Der Nähmaschinenantrieb kann als Servomotor ausgeführt sein. Ein Nähmaschinenantrieb mit magnetischem Encodersystem ermöglicht eine optimierte Ansteuerbarkeit des Antriebs, insbesondere eines Nähmaschinenmotors, und kann somit die Handhabung einer Nähmaschine erleichtern.

Ein Encodersystem ist bekannt aus der DE 39 90 206 T1. Weitere Encodersysteme sind bekannt aus der US 4,551,676 A, der US 2015/0091554 A1 und der US 4,987,040 A.

Eine Ringinkrementalspur gemäß Anspruch 2 ermöglicht eine sichere und störungsfreie Ermittlung von Positions- und Drehzahlinformationen. Soweit eine 1:1-Übersetzung zwischen einem Rotor des Motors und der Scheibe gewährleistet ist, entspricht die Drehzahl einer Motorwelle des Motors der Drehzahl der magnetischen Scheibe.

Eine Ringabschnitts-Inkrementalspur nach Anspruch 3 dient zur Nullpunkt-Referenzierung des Rotors.

Die Auswertung der Positions- und Drehzahlinformationen der Ringinkrementalspur gemäß Anspruch 4 erfolgt mittels einer Auswerteeinheit mit integriertem Mikrocontroller und mit Magnetsensoren. Dies sorgt für ein kompaktes Encodersystem.

Gemäß Anspruch 5 kommt zur Detektion der Ringabschnitts-Inkrementalspur ein weiterer, separater Magnetsensor zum Einsatz. Dieser Sensor ermöglicht somit eine unabhängige Nullpunkt-Referenzierung.

Die Vorteile einer Nähmaschine nach Anspruch 6 entsprechen denen, die vorstehend unter Bezugnahme auf den Nähmaschinenantrieb bereits erläutert wurden.

Ausführungsbeispiele der Erfindung werden nachfolgend anhand der Zeichnungen näher erläutert. Es zeigen:
- Fig. 1: perspektivisch eine Encodersystem-Baugruppe zum Anbau an einem Servomotor einer Nähmaschine;
- Fig. 2: eine perspektivische Draufsicht auf die Encodersystem-Baugruppe;
- Fig. 3: eine perspektivische Detailansicht eines magnetischen Encodersystems.

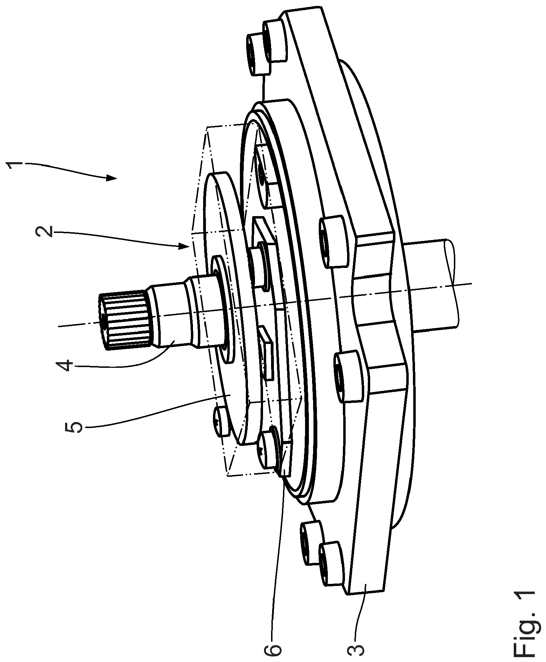

Anhand der Fig. 1, 2 und 3 wird nachfolgend eine Ausführung eines magnetischen Encodersystems für einen Nähmaschinenantrieb in Form eines Servomotors einer Nähmaschine erläutert.

Eine Encodersystem-Baugruppe 1 dient zur Befestigung eines magnetischen Encodersystems 2 an einem Servomotor für eine Nähmaschine. Die Baugruppe 1 beinhaltet neben dem magnetischen Encodersystem 2 einen Anbauflansch 3. Durch den Anbauflansch 3 wird das magnetische Encodersystem 2 am Servomotor befestigt. Durch eine Öffnung im Anbauflansch 3 und durch die kreisförmige, zentrale Durchtrittsöffnung des magnetischen Encodersystems 2 ist eine Motorwelle 4 des ansonsten nicht dargestellten Servomotors durchgeführt.

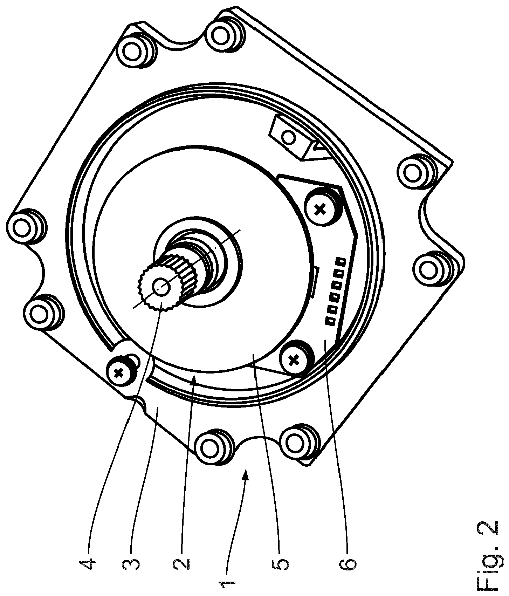

Eine die Durchtrittsöffnung ringförmige umgebende magnetische, insbesondere ferritische Scheibe 5 des magnetischen Encodersystems 2 ist drehfest mit der Motorwelle 4 des Servomotors verbunden. Auf einer zusätzlich an dem Anbauflansch 3 montierten Platte 6 befindet sich eine Auswerteeinheit 7. Diese ist ortsfest zum Anbauflansch 3 ausgeführt (vgl. Fig. 2).

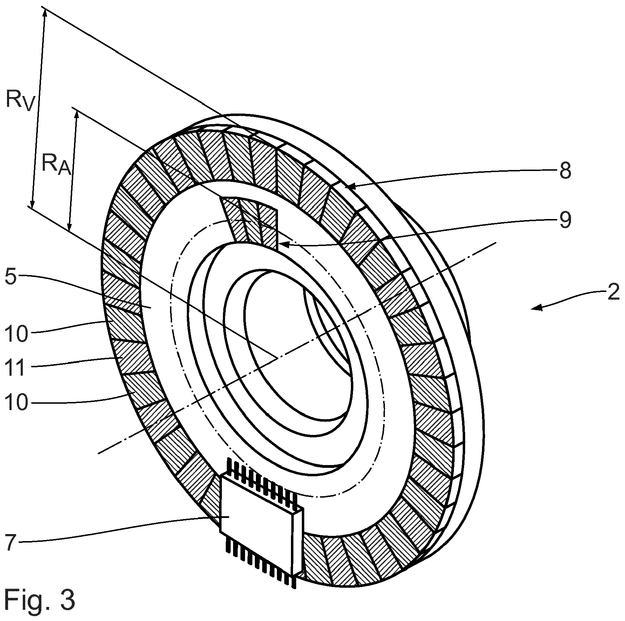

Das magnetische Encodersystem 2 umfasst neben der Auswerteeinheit 7 eine Vollring-Inkrementalspur 8 und eine Ringabschnitts-Inkrementalspur 9 (vgl. Fig. 3). Die Vollring-Inkrementalspur 8 und die Ringabschnitts-Inkrementalspur 9 erstrecken sich längs eines Umfangs der magnetischen Scheibe 5, wobei die Ringabschnitts-Inkrementalspur 9 lediglich einen Teilabschnitt des Umfangs umfasst. Inkrementalspuren 8, 9 weisen sich abwechselnde Nordpolelemente 10 und Südpolelemente 11 auf. Die Inkrementalspuren 8 und 9 sind koaxial zueinander und zur Motorwelle 4 angeordnet, wobei ein Radius R_{A} der Ringabschnitts-Inkrementalspur 9 geringer ist als ein Radius Rv der Vollring-Inkrementalspur 8 (vgl. Fig. 3).

Die Auswerteeinheit 7 ist gegenüberliegend der magnetischen Scheibe 5 so angeordnet, dass ein erster, nicht dargestellter Magnetsensor der Auswerteeinheit 7 die Vollring-Inkrementalspur 8 und ein weiterer, nicht näher dargestellter Magnetsensor der Auswerteeinheit 7 die Ringabschnitts-Inkrementalspur 9 erfasst. Die beiden Magnetsensoren sind radial zueinander versetzt angeordnet.

Verschiedene, nicht dargestellte weitere Varianten der Encodersystem-Baugruppe sind möglich.

Anstelle genau einer Ringabschnitts-Inkrementalspur entsprechend der Ringabschnitts-Inkrementalspur 9 des vorstehend beschriebenen Ausführungsbeispiels können auch mehrere Ringabschnitts-Inkrementalspuren vorgesehen sein. Umfangserstreckungen der Ringabschnitte dieser Ringabschnitts-Inkrementalspuren können sich voneinander unterscheiden. Wenn in einem solchen Fall beispielsweise zwei oder drei Ringabschnitts-Inkrementalspuren mit sich voneinander unterscheidenden Umfangserstreckungen vorgesehen sind, ist prinzipiell eine Drehrichtungserkennung mit einer solchen Variante des Encodersystems möglich. In einem solchen Fall genügen zwei unterschiedliche Typen von Umfangserstreckungen. Es kann beispielsweise eine Abfolge "kurz/lang/lang" von einer Abfolge "lang/lang/kurz" zur Drehrichtungserkennung unterschieden werden.

Soweit mehrere Vollring-Inkrementalspuren zum Einsatz kommen, können diese auf unterschiedlichen Radien-Abschnitten zur gemeinsamen Drehachse angeordnet sein. Dies erleichtert eine magnetsensorische Abtastung dieser Inkrementalspuren.

## Patentansprüche

1. Nähmaschinenantrieb mit einem magnetischen Encodersystem (2)
- mit einer Scheibe (5) aus magnetischem Material, welches magnetisiert ist,
- mit sich abwechselnden Nord- und Südpolelementen (10, 11), die als Inkrementalmarkierungen dienen,
-- mit einer Vollring-Inkrementalspur (8), die sich als Ring über 360° längs eines Umfangs der Scheibe erstreckt,
-- mit einer zusätzlichen Ringabschnitts-Inkrementalspur (9), die als Ringabschnitt auf der Scheibe ausgeführt ist.

2. Nähmaschinenantrieb nach Anspruch 1, **dadurch gekennzeichnet, dass** die Vollring-Inkrementalspur (8) zur Ermittlung der Positions- und Drehzahlinformation dient.

3. Nähmaschinenantrieb nach Anspruch 1 oder 2, **dadurch gekennzeichnet, dass** die Ringabschnitts-Inkrementalspur (9) zur Nullpunkt-Referenzierung dient.

4. Nähmaschinenantrieb nach einem der Ansprüche 1 bis 3, **dadurch gekennzeichnet, dass** eine Auswerteeinheit (7) mit integriertem Mikrocontroller und Magnetsensoren die Auswertung der Vollring-Inkrementalspur (8) übernimmt.

5. Nähmaschinenantrieb nach einem der Ansprüche 1 bis 4, **dadurch gekennzeichnet, dass** zur Detektion der Ringabschnitts-Inkrementalspur (9) ein weiterer, separater Magnetsensor zum Einsatz kommt.

6. Nähmaschine mit einem Nähmaschinenantrieb nach Anspruch 5.
